# EUROPEAN PATENT APPLICATION

(11) **EP 4 068 238 A1**
(43) Date of publication of application: **05.10.2022**
(21) Application number: 20893064.4
(22) Date of filing: 13.04.2020
(51) Int. Cl.: G08G 1/017, H04N 5/232

(54) **IMAGE CAPTURING METHOD AND APPARATUS, ELECTRONIC PHOTOGRAPHY DEVICE, AND COMPUTER-READABLE STORAGE MEDIUM**

(30) Priority: 29.11.2019 CN 201911198851
(71) Applicant: Zhejiang Uniview Technologies Co., Ltd., Hangzhou, Zhejiang 310051 (CN)
(72) Inventor: SUN, Mingming, Hangzhou, Zhejiang 310051 (CN)
(74) Representative: DREISS Patentanwälte PartG mbB
(86) International application number: PCT/CN2020/084400
(87) International publication number: WO 2021/103388

(57) **Abstract**

An image capturing method and apparatus, an electronic photography device and a computer-readable storage medium are provided. The image capturing method includes: in a snapshot mode, performing image acquisition at a first frame rate and buffering an acquired first captured image; in a live mode, acquiring a second captured image at a second frame rate, where the second frame rate is less than the first frame rate; and processing the buffered first captured image and the second captured image at the second frame rate.

## Description

This application claims priority to Chinese Patent Application No. 201911198851.0 filed with the China National Intellectual Property Administration (CNIPA) on Nov. 29, 2019, the disclosure of which is incorporated herein by reference in its entirety.

### TECHNICAL FIELD

The present application relates to the field of monitoring technology, for example, an image capturing method and apparatus, an electronic photography device and a computer-readable storage medium.

### BACKGROUND

As the volume of road traffic increases, the detection of violations, such as a speeding violation and emergency lane occupation, is provided for many roads such as urban roads, highways and expressways.

In the related art, to reduce a capturing response time of an image and capture a vehicle image in time, an electronic photography device needs to acquire an image at a high frame rate and process the captured image. However, in an actual scenario, an image processor generally has a limited processing capability. If the image with a relatively high frame rate is to be processed, the hardware requirements of the image processor need to be increased accordingly, resulting in an increase of hardware costs.

### SUMMARY

The present application provides an image capturing method and apparatus, an electronic photography device and a computer-readable storage medium, so as to ensure an image processing capability on the premise that a hardware specification is not improved.

Embodiments of the present application provide an image capturing method including the steps below.

In a snapshot mode, image acquisition is performed at a first frame rate to obtain a first captured image and the first captured image is buffered.

In a live mode, a second captured image is acquired at a second frame rate, where the second frame rate is less than the first frame rate.

The buffered first captured image and the second captured image are processed at the second frame rate.

Embodiments of the present application further provide an image capturing apparatus including an image acquisition and buffer module and an image acquisition and processing module.

The image acquisition and buffer module is configured to: in a snapshot mode, perform image acquisition at a first frame rate to obtain a first captured image and buffer the first captured image; and in a live mode, acquire a second captured image at a second frame rate, where the second frame rate is less than the first frame rate.

The image acquisition and processing module is configured to process the buffered first captured image and the second captured image at the second frame rate.

Embodiment of the present application further provides an electronic photography device including one or more processors and a storage apparatus.

The storage apparatus is configured to store one or more programs.

The one or more programs are executed by the one or more processors to cause the one or more processors to implement the image capturing method in any one of the embodiments of the present application.

Embodiment of the present application further provides a computer-readable storage medium, which is configured to store a computer program which, when executed by a processor, implements the image capturing method in any one of the embodiments of the present application.

### BRIEF DESCRIPTION OF DRAWINGS

FIG. 1 is a flowchart of an image capturing method according to an embodiment of the present application;
FIG. 2 is a schematic diagram of an implementation process of image capturing according to an embodiment of the present application;
FIG. 3 is a flowchart of another image capturing method according to an embodiment of the present application;
FIG. 4 is a schematic diagram of the comparison between image acquisition and image output according to an embodiment of the present application;
FIG. 5 is a block diagram of an image capturing apparatus according to an embodiment of the present application; and
FIG. 6 is a structural diagram of an electronic photography device according to an embodiment of the present application.

### DETAILED DESCRIPTION

The present application is described below in conjunction with drawings and embodiments. The embodiments described herein are intended to explain the present application and not to limit the present application. For ease of description, only part, not all, of structures related to the present application are illustrated in the drawings.

Before example embodiments are discussed, it is to be noted that some example embodiments are described as processing or methods depicted in flowcharts. Although multiple operations (or steps) are described as sequential processing in the flowcharts, many of the operations (or steps) may be implemented concurrently, coincidently or simultaneously. Additionally, the sequence of the multiple operations may be rearranged. The processing may be terminated when the operations are completed, but the processing may further have additional steps that are not included in the drawings. The processing may correspond to a method, a function, a procedure, a subroutine, a subprogram or the like.

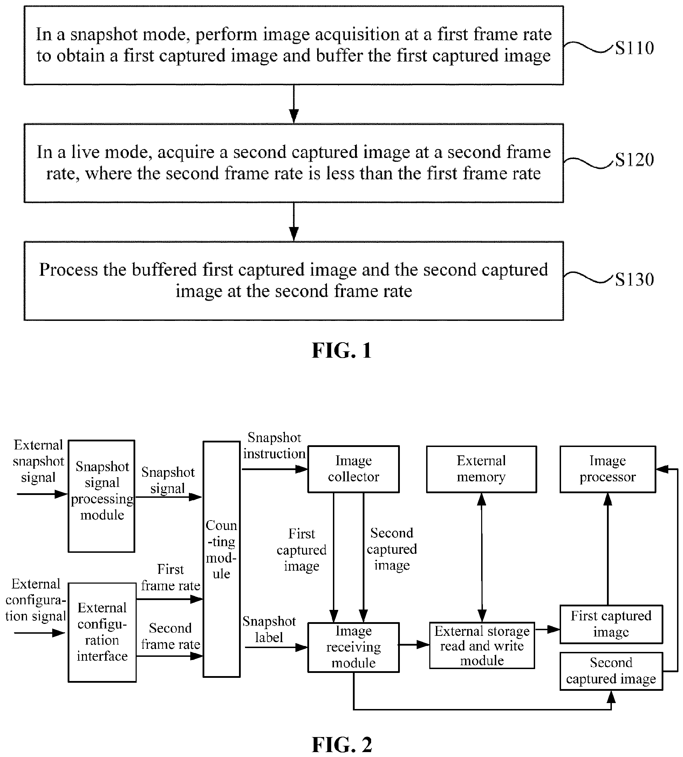

FIG. 1 is a flowchart of an image capturing method according to an embodiment of the present application. The embodiment of the present application may be applied to the case where an image of a vehicle is acquired, for example, the case where an image of a vehicle driving through a violation detection area is captured. The method may be performed by an image capturing apparatus which may be implemented by software and/or hardware and integrated on an electronic photography device having a network communication function. The electronic photography device may be a bayonet camera device or the like. As shown in FIG. 1, the image capturing method in the embodiment of the present application may include the steps below.

In S 110, in a snapshot mode, image acquisition is performed at a first frame rate to obtain a first captured image and the first captured image is buffered.

In this embodiment, the first frame rate is a pre-configured frame rate used in the snapshot mode, and the first frame rate can represent the number of image frames that can be acquired per second when the image acquisition is performed in the snapshot mode. When the image acquisition is performed in the snapshot mode, the snapshot image is mainly used for recognizing key information such as a license plate, a vehicle model and a human face, a high-quality image is required, and it needs to be ensured that an image acquisition speed is fast enough. Therefore, the image acquisition is generally performed at a relatively high frame rate. Optionally, considering different requirements of snapshot and live modes in actual scenarios, a configuration parameter value of a frame rate in the snapshot mode and a configuration parameter value of a frame rate in a live mode need to be preset according to factors in the actual scenarios, so as to set the first frame rate and a second frame rate, respectively.

In this embodiment, in the snapshot mode, the image acquisition is performed in the first frame rate by an image collector, so as to obtain at least one frame of the first captured image. Considering that the first frame rate used in the snapshot mode is a relatively high frame rate, if the first captured image is directly inputted to an image processor for processing, it is very likely that an image with an extremely high frame rate cannot be processed in time since the image processor has a limited processing capability. Therefore, when the first captured image is obtained, the first captured image is buffered. FIG. 2 is a schematic diagram of an implementation process of image capturing according to an embodiment of the present application. Referring to FIG. 2, optionally, the electronic photography device is provided with an external storage read and write module so that the first captured image can be written into the external storage read and write module and stored to an external memory by the external storage read and write module. The external storage read and write module exists in the form of hardware and/or software.

In S 120, in the live mode, a second captured image is acquired at the second frame rate, where the second frame rate is less than the first frame rate.

In this embodiment, the second frame rate is a pre-configured frame rate used in the live mode, and the second frame rate can represent the number of image frames that can be acquired per second when the image acquisition is performed in the live mode. When the image acquisition is performed in the live mode, an image obtained in the live mode is only used for recording information about surroundings, and the image is not required to have a very high quality as long as the image can be viewed clearly. Therefore, the image acquisition is performed at a relatively low frame rate. The requirement in the live mode can be satisfied by simply capturing an image of a surrounding at a relatively low frame rate. Here, the second frame rate is less than the first frame rate used in the snapshot mode.

In this embodiment, in the live mode, the image acquisition is performed in the second frame rate by the image collector, so as to obtain at least one frame of the second captured image. The frame rate of the second captured image obtained at the second frame rate generally matches with a hardware specification of the image processor and the second captured image may be directly outputted to the image processor for processing instead of being buffered. Optionally, the first captured image acquired at the first frame rate is buffered due to an extremely high frame rate. Thus, to ensure the sequence of the second captured image acquired at the second frame rate and the first captured image, the acquired second captured image is also buffered when the second captured image is obtained.

In this embodiment, in an optional example, the image acquisition is performed at the second frame rate so as to obtain the second captured image, and the second captured image is buffered, where the second captured image is buffered by the same process as the first captured image so that the first captured image and the second captured image are buffered sequentially each time, which can ensure the sequence of captured images. Referring to FIG. 2, optionally, similar to the buffering of the first captured image, the electronic photography device can write the acquired second captured image into the external storage read and write module so that the acquired second captured image is sequentially stored to the external memory by the external storage read and write module.

In this embodiment, in an optional example, referring to FIG. 2, the electronic photography device is provided with an external configuration interface, where an external configuration signal for setting a size of the frame rate is received through the external configuration interface, and the configuration parameter value of the frame rate in the snapshot mode and the configuration parameter value of the frame rate in the live mode are set based on information about frame rate configuration parameters included in the external configuration signal. In this manner, when the electronic photography device enters the snapshot mode or the live mode, the electronic photography device can obtain the preset frame rate in the mode where the electronic photography device is and quickly captures an image at the preset frame rate.

In S130, the buffered first captured image and the second captured image are processed at the second frame rate.

In this embodiment, the first captured image snapshot at the first frame rate is an image acquired at a high speed by the image collector and has a relatively high frame rate which tends to exceed the processing capability of the image processor. Therefore, after the first captured image is obtained, the first captured image may be buffered. When the second frame rate conforms to the hardware specification of the image collector, the image processor may process the buffered first captured image and the second captured image at the second frame rate. In this manner, the following problem can be solved: a captured image cannot be processed in time since a relatively high frame rate of the captured image exceeds the processing capability of the image processor.

In an optional implementation of this embodiment, the step in which the buffered first captured image and the second captured image are processed at the second frame rate includes the step below.

The image processor acquires the buffered first captured image and the second captured image and processes an acquired captured image at the second frame rate.

In this implementation, the image acquisition is performed at the second frame rate less than the first frame rate such that the second captured image is obtained. Considering the sequence of captured images, the second captured image acquired at the second frame rate may also be buffered. Further, the buffered first captured image and second captured image are outputted to the image processor uniformly at the second frame rate, that is, the captured images are outputted to the image processor at a relatively low frame rate that matches with the specification of the image processor so that the snapshot image is acquired at a high speed and outputted at a low speed.

In this implementation, as long as it is ensured that the second frame rate is the relatively low frame rate adapted to the hardware specification of the image processor, when the buffered captured image is outputted to the image processor at the second frame rate, the processing capability of the image processor is not exceeded, effectively reducing a probability of a blocked image when the image processor processes images. When the buffered first captured image and the second captured image are acquired, the image processor may process the obtained captured image according to service requirements, for example, the captured image is processed so as to determine whether a vehicle in the first captured image has a violation behavior such as overspeeding or occupying an emergency lane.

An image capturing scheme is provided in the embodiments of the present application, where in the snapshot mode, the electronic photography device performs the image acquisition at the first frame rate, and in the live mode, the electronic photography device performs the image acquisition at the second frame rate less than the first frame rate. Furthermore, the electronic photography device buffers the first captured image acquired at the first frame rate. The scheme in this embodiment can ensure that the electronic photography device can automatically adjust a frame rate for image capturing according to different capturing modes to perform the image acquisition; when a scenario needs to be snapshot in time, a capturing response time of an image can be greatly reduced, and the image acquisition is performed in time at a relatively high frame rate; and when the scenario does not need to be snapshot, the image acquisition is performed at a relatively low frame rate. Meanwhile, with the scheme of the present application, the first frame rate and the second frame rate are used alternately, which can not only increase a snapshot acquisition speed and the number of images acquired at a relatively high frame rate among many acquired images but also avoid too large a number of images with a high frame rate and alleviate processing pressure of the image processor. Moreover, considering that the image processor cannot operate normally when an image with a high frame rate enters the image processor with a low frame rate, the images with a high frame rate whose number is relatively small are buffered and outputted at the second frame rate, and only then a live image with the second frame rate is outputted so that the number of images with a high frame rate is greatly reduced, the frame rate does not exceed the processing capability of the image processor, and the captured image can be processed normally instead of being blocked even if the hardware specification of the image processor is not improved.

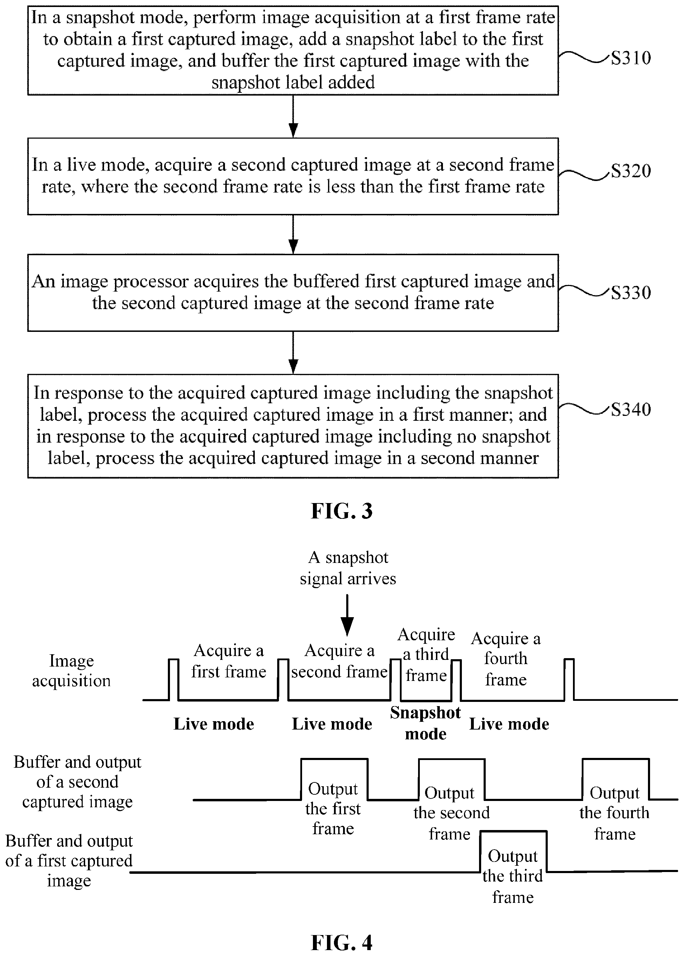

FIG. 3 is a flowchart of another image capturing method according to an embodiment of the present application. The embodiment of the present application is described based on the preceding embodiments, and the embodiment of the present application may be combined with an optional solution in one or more of the preceding embodiments. As shown in FIG. 3, the image capturing method provided in the embodiment of the present application includes the steps below.

In S310, in a snapshot mode, image acquisition is performed at a first frame rate to obtain a first captured image, a snapshot label is added to the first captured image, and the first captured image with the snapshot label added is buffered.

In this embodiment, after the first captured image is snapshot, the snapshot label may be added to the first captured image, for example, a label signal in the first captured image is raised by one frame. The first captured image acquired in the snapshot mode is distinguished from a second captured image acquired in a live mode by the snapshot label. Optionally, the first captured image with the snapshot label added is written into an external storage read and write module so that the first captured image is stored to an external memory by the external storage read and write module.

In an optional implementation of this embodiment, the step in which in the snapshot mode, the image acquisition is performed at the first frame rate includes at least the following: if a snapshot signal is received, the snapshot mode is determined, and the image acquisition is performed at the first frame rate according to the number of snapshot frames indicated in the snapshot mode.

In this implementation, an electronic photography device may also receive an externally triggered snapshot signal. After the electronic photography device receives the snapshot signal, the electronic photography device enters the snapshot mode in response to the snapshot signal. That is, the electronic photography device switches from the live mode to the snapshot mode to perform the image acquisition. In this manner, the electronic photography device can perform the image acquisition at the first frame rate in the snapshot mode.

In this implementation, the image acquisition performed at the first frame rate in the snapshot mode is limited snapshotting rather than endless snapshotting. Optionally, whether to end the snapshot mode to switch back to the live mode is determined by the number of snapshot frames and a snapshotting time. In an optional example, the number of frames of the first captured image to be acquired is indicated by a preset number of snapshot frames for the image acquisition performed at the first frame rate in the snapshot mode so that whether to switch from the snapshot mode to the live mode can be determined by the number of snapshot frames. In another optional example, an acquisition time for which the image acquisition is performed at the first frame rate is indicated by a preset snapshotting time for the image acquisition performed at the first frame rate in the snapshot mode so that whether to switch from the snapshot mode to the live mode can be determined by the snapshotting time. Optionally, the electronic photography device is further provided with a counter, and the number of snapshot frames is determined or the snapshotting time is counted by the counter, so as to ensure that the electronic photography device determines whether it is in the snapshot mode according to a counting result.

In this implementation, the electronic photography device can generate a first capture control instruction including the first frame rate according to the snapshot signal, where the first capture control instruction carries the number of snapshot frames or the snapshotting time for the image acquisition performed at the first frame rate in the snapshot mode. An image collector performs the image acquisition at the first frame rate according to the number of snapshot frames or the snapshotting time indicated in the first capture control instruction to obtain one or more frames of the first captured image and buffers the first captured image.

In this implementation, the electronic photography device can receive an external snapshot signal sent by a vehicle detection device. The vehicle detection device includes a vehicle detector and a vehicle detection radar. The vehicle detection device indicates a vehicle detection area at a preset position. When a vehicle enters the vehicle detection area, the vehicle detection device can trigger the generation of the snapshot signal and send the generated snapshot signal to the electronic photography device. In an optional example, the electronic photography device is further provided with a snapshot signal processing module. The snapshot signal processing module can shape the received snapshot signal to obtain the processed snapshot signal, so as to avoid wrong snapshotting due to a glitch or an interference signal in the initial snapshot signal.

In this implementation, it can be seen from the preceding triggered generation condition of the snapshot signal that the snapshot signal is a randomly generated signal, which may be a single signal or continuous signals. The electronic photography device generates, according to a received snapshot trigger signal, the first capture control instruction that causes the image collector to perform the image acquisition at the first frame rate for the preset number of snapshot frames. Similarly, when the electronic photography device switches from the snapshot mode to the live mode, the electronic photography device can also generate a second capture control instruction for performing the image acquisition at a second frame rate. Relative to the second frame rate, when the image acquisition is performed at the first frame rate, the first frame rate is used for a shorter time, the frame rate is higher, and a sampling interval is smaller, which is conducive to snapshotting at a high speed and in dense scenarios.

In S320, in the live mode, the second captured image is acquired at the second frame rate, where the second frame rate is less than the first frame rate.

In an optional implementation of this embodiment, the step in which the second captured image is acquired at the second frame rate includes: performing the image acquisition at the second frame rate to obtain the second captured image and buffering the acquired second captured image; where the second captured image is buffered by the same process as the first captured image.

In this implementation, when the image acquisition is performed at the second frame rate in the live mode is not fixed and can be dynamically changed according to the snapshot signal. In other words, when the electronic photography device receives the snapshot signal, the electronic photography device automatically switches to the snapshot mode to end the live mode, and when the snapshot mode ends, the electronic photography device automatically returns to the live mode to continue the image acquisition.

In this implementation, when the number of snapshot frames and the snapshotting time for the image acquisition performed at the first frame rate in the snapshot mode meet conditions, for example, when the number of snapshot frames at a current moment reaches the preset number of snapshot frames or the snapshotting time at the current moment reaches the preset snapshotting time, the electronic photography device may switch from the snapshot mode to the live mode. At this time, the electronic photography device can generate the second capture control instruction including the second frame rate, where the second capture control instruction carries an instruction to perform the image acquisition at the second frame rate in the live mode. The image collector performs continuous image acquisition at the second frame rate according to the second capture control instruction to obtain one or more frames of the second captured image. If the electronic photography device is still in the live mode, the electronic photography device continuously acquires the second captured image at the second frame rate until the electronic photography device receives the snapshot signal and switches from the live mode to the snapshot mode.

In this implementation, when the electronic photography device switches from the snapshot mode to the live mode, the electronic photography device switches from the image acquisition performed at the first frame rate to the image acquisition performed at the second frame rate. When the electronic photography device switches from the live mode to the snapshot mode, the electronic photography device switches from the image acquisition performed at the second frame rate to the image acquisition performed at the first frame rate.

In S330, an image processor acquires the buffered first captured image and the second captured image at the second frame rate.

In this embodiment, FIG. 4 is a schematic diagram of the comparison between image acquisition and image output according to an embodiment of the present application. Referring to FIG. 4, the processes of acquiring the first captured image in the snapshot mode when the snapshot signal is received, acquiring the second captured image in the live mode and outputting the buffered first captured image and the second captured image are described below. (1) The snapshot signal arrives during the acquisition of a second frame in the live mode, the live mode is switched to the snapshot mode when a third frame is acquired, and the time for image acquisition in the snapshot mode is shorter than the time for image acquisition in the live mode. (2) The image acquired by the image collector during the acquisition of the third frame (here, the third frame refers to the time for the third frame in FIG. 4) is the first captured image acquired in the snapshot mode, the first captured image acquired during the acquisition of the third frame is written into the external memory through the external storage read and write module, and finally, the first captured image and the second captured image are outputted at the second frame rate from the external memory to the image processor. (3) In the case of continuous snapshotting, the sent first capture control instruction includes indication information indicating continuous snapshot acquisition so that the continuous snapshotting is performed, and two frames of first captured images that are snapshot are continuously sent out at the same time.

In S340, in response to the acquired captured image including the snapshot label, the acquired captured image is processed in a first manner; and in response to the acquired captured image including no snapshot label, the acquired captured image is processed in a second manner.

In this embodiment, if the acquired captured image includes the snapshot label, it is determined that the captured image belongs to the first captured image, and the captured image is processed in the first manner corresponding to the first captured image; if the acquired captured image includes no snapshot label, it is determined that the captured image belongs to the second captured image, and the captured image is processed in the second manner corresponding to the second captured image. The first manner is a processing manner used for performing image processing on the snapshot first captured image, for example, a manner for recognizing key information such as a license plate, a vehicle model or a human face in the first captured image. The second manner is a processing manner used for performing image processing on the second captured image obtained in a live situation, for example, a manner for fuzzy recognition of whether an object exists in the second captured image.

The embodiment of the present application provides an image capturing scheme. The scheme in this embodiment can ensure that the electronic photography device can automatically adjust a frame rate for image capturing according to different capturing modes to perform the image acquisition; when a scenario needs to be snapshot in time, a capturing response time of an image can be greatly reduced, and the image acquisition is performed in time at a relatively high frame rate; and when the scenario does not need to be snapshot, the image acquisition is performed at a relatively low frame rate. Meanwhile, a limited number of images among many images captured with the scheme of the present application are acquired at a relatively high frame rate, which can avoid too large a number of images with a high frame rate and alleviate processing pressure of the image processor. Moreover, the images with a high frame rate whose number is relatively small are buffered and outputted at the second frame rate, and only then a live image with the second frame rate is outputted so that the frame rate does not exceed the specification of the image processor, and the captured image can be processed normally instead of being blocked even if the hardware specification of the image processor is not improved.

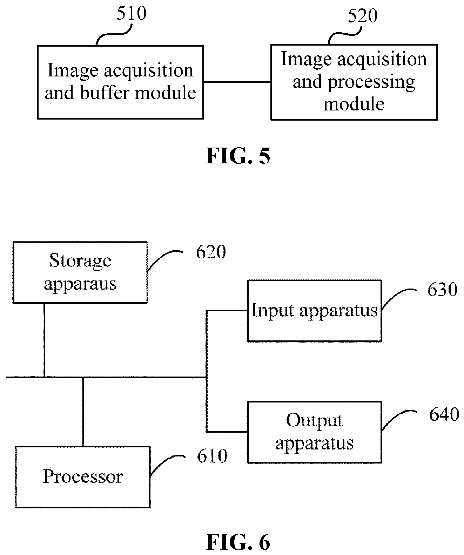

FIG. 5 is a block diagram of an image capturing apparatus according to an embodiment of the present application. The embodiment of the present application may be applied to the case where an image of a vehicle is acquired, for example, the case where an image of a vehicle driving through a violation detection area is captured. The image capturing apparatus may be implemented by software and/or hardware and integrated on an electronic photography device having a network communication function. As shown in FIG. 5, the image capturing apparatus in the embodiment of the present application includes an image acquisition and buffer module 510 and an image acquisition and processing module 520.

The image acquisition and buffer module 510 is configured to: in a snapshot mode, perform image acquisition at a first frame rate to obtain a first captured image and buffer the first captured image; and in a live mode, acquire a second captured image at a second frame rate, where the second frame rate is less than the first frame rate. The image acquisition and processing module 520 is configured to process the buffered first captured image and the second captured image at the second frame rate.

Based on the preceding embodiment, optionally, the image acquisition and processing module 520 is configured to: acquire the buffered first captured image and the second captured image and process an acquired captured image at the second frame rate through an image processor.

Based on the preceding embodiment, optionally, the image acquisition and buffer module 510 includes a snapshot label addition unit.

The snapshot label addition unit is configured to add a snapshot label to the first captured image and buffer the first captured image with the snapshot label added.

The image acquisition and processing module 520 includes an image processor unit.

The image processor unit is configured to: in the case where the acquired captured image includes the snapshot label, process the captured image in a first manner; and in the case where the acquired captured image includes no snapshot label, process the captured image in a second manner.

Based on the preceding embodiment, optionally, the image acquisition and buffer module 510 is configured to perform the image acquisition at the second frame rate to obtain the second captured image and buffer the acquired second captured image; where the second captured image is buffered by the same process as the first captured image.

Based on the preceding embodiment, optionally, the image acquisition and buffer module 510 includes an image snapshot acquisition unit.

The image snapshot acquisition unit is configured to: in the case where a snapshot signal is received, determine the snapshot mode and perform the image acquisition at the first frame rate according to the number of snapshot frames indicated in the snapshot mode.

The image capturing apparatus provided in the embodiment of the present application may perform the image capturing method provided in any one of the preceding embodiments of the present application and has functions and effects corresponding to the image capturing method performed. For a process, reference may be made to the preceding method embodiments.

FIG. 6 is a structural diagram of an electronic photography device according to an embodiment of the present application. As shown in FIG. 6, the electronic photography device provided in the embodiment of the present application includes one or more processors 610 and a storage apparatus 620. One or more processors 610 may be disposed in the electronic photography device, where one processor 610 is shown as an example in FIG. 6. The storage apparatus 620 is configured to store one or more programs, where the one or more programs are executed by the one or more processors 610 to cause the one or more processors 610 to implement the image capturing method described in any one of the embodiments of the present application.

The electronic photography device may further include an input apparatus 630 and an output apparatus 640.

The processor 610, the storage apparatus 620, the input apparatus 630 and the output apparatus 640 in the electronic photography device may be connected via a bus or in other manners, where the connection via a bus is shown as an example in FIG. 6.

As a computer-readable storage medium, the storage apparatus 620 in the electronic photography device may be configured to store one or more programs. The programs may be software programs, computer-executable programs and modules, such as program instructions/modules corresponding to the image capturing method provided in the embodiments of the present application. The processor 610 executes software programs, instructions and modules stored in the storage apparatus 620 to perform various function applications and data processing of the electronic photography device, that is, to implement the image capturing method in the preceding method embodiments.

The storage apparatus 620 may include a program storage area and a data storage area, where the program storage area may store an operating system and an application program required by at least one function, and the data storage area may store the data created according to the use of the electronic photography device. Additionally, the storage apparatus 620 may include a high-speed random-access memory and may also include a non-volatile memory, such as at least one magnetic disk memory, a flash memory or another non-volatile solid-state memory. In some examples, the storage apparatus 620 may include memories which are remotely disposed relative to the processor 610, and these remote memories may be connected to the device via a network. Examples of the preceding network include, but are not limited to, the Internet, an intranet, a local area network, a mobile communication network and a combination thereof.

The input apparatus 630 may be configured to receive inputted digital or character information and generate key signal input related to user settings and function control of the electronic photography device. The output apparatus 640 may include a display device such as a display screen.

When executed by the one or more processors 610, the one or more programs included in the above electronic photography device perform the operations below.

In a snapshot mode, image acquisition is performed at a first frame rate to obtain a first captured image and the first captured image is buffered; in a live mode, a second captured image is acquired at a second frame rate, where the second frame rate is less than the first frame rate; and the buffered first captured image and the second captured image are processed at the second frame rate.

When executed by the one or more processors 610, the one or more programs included in the above electronic photography device may also perform related operations in the image capturing method provided in any one of the embodiments of the present application.

An embodiment of the present application provides a computer-readable storage medium, which is configured to store a computer program which, when executed by a processor, is used for performing an image capturing method. The method includes the steps below.

In a snapshot mode, image acquisition is performed at a first frame rate to obtain a first captured image and the first captured image is buffered; in a live mode, a second captured image is acquired at a second frame rate, where the second frame rate is less than the first frame rate; and the buffered first captured image and the second captured image are processed at the second frame rate.

Optionally, when executed by the processor, the program may also be used for performing image capturing provided in any one of the embodiments of the present application.

The computer-readable storage medium, for example, may be, but is not limited to, an electronic, magnetic, optical, electromagnetic, infrared or semiconductor system, apparatus or device or any combination thereof. Examples (a non-exhaustive list) of the computer-readable storage medium include an electrical connection having one or more wires, a portable computer magnetic disk, a hard disk, a random-access memory (RAM), a read-only memory (ROM), an erasable programmable read-only memory (EPROM), a flash memory, an optical fiber, a portable compact disc read-only memory (CD-ROM), an optical storage device, a magnetic storage device or any suitable combination thereof. The computer-readable storage medium may be any tangible medium including or storing a program. The program may be used by or used in conjunction with an instruction execution system, apparatus or device.

Computer program codes for performing the operations of the present application may be written in one or more programming languages or a combination thereof, the programming languages including object-oriented programming languages such as Java, Smalltalk and C++ and further including conventional procedural programming languages such as C programming language or similar programming languages. Program codes may be executed entirely on a user computer, partly on a user computer, as a stand-alone software package, partly on a user computer and partly on a remote computer, or entirely on a remote computer or a server. In the case where the remote computer is involved, the remote computer may be connected to the user computer via any type of network including a local area network (LAN) or a wide area network (WAN) or may be connected to an external computer (for example, via the Internet provided by an Internet service provider).

In the description of the present application, the description of reference terms such as "one embodiment", "some embodiments", "an example", "a specific example" or "some examples" means that a feature, structure, material or characteristic described in conjunction with the embodiment or the example is included in at least one embodiment or example of the present application. In the specification, the illustrative description of the preceding terms does not necessarily refer to the same embodiment or example. Moreover, described features, structures, materials or characteristics may be combined in an appropriate manner in any one or more embodiments or examples.

## Claims

1. An image capturing method, comprising:
in a snapshot mode, performing image acquisition at a first frame rate to obtain a first captured image and buffering the first captured image;
in a live mode, acquiring a second captured image at a second frame rate, wherein the second frame rate is less than the first frame rate; and
processing the buffered first captured image and the second captured image at the second frame rate.

2. The method of claim 1, wherein processing the buffered first captured image and the second captured image at the second frame rate comprises:
acquiring, through an image processor and at the second frame rate, the buffered first captured image and the second captured image to obtain an acquired captured image; and
processing, through the image processor and at the second frame rate, the acquired captured image.

3. The method of claim 2, wherein
buffering the first captured image comprises: adding a snapshot label to the first captured image and buffering the first captured image with the snapshot label added; and
processing the acquired captured image comprises: in response to the acquired captured image comprising the snapshot label, processing the acquired captured image in a first manner; and in response to the acquired captured image comprising no snapshot label, processing the acquired captured image in a second manner.

4. The method of claim 1, wherein acquiring the second captured image at the second frame rate comprises:
performing the image acquisition at the second frame rate to obtain the second captured image and buffering the second captured image; wherein the second captured image is buffered by a same process as the first captured image.

5. The method of any one of claims 1 to 4, wherein in the snapshot mode, performing the image acquisition at the first frame rate comprises:
in response to a snapshot signal being received, determining the snapshot mode, and performing the image acquisition at the first frame rate according to a number of snapshot frames indicated in the snapshot mode.

6. An image capturing apparatus, comprising:
an image acquisition and buffer module, which is configured to: in a snapshot mode, perform image acquisition at a first frame rate to obtain a first captured image and buffer the first captured image; and in a live mode, acquire a second captured image at a second frame rate; wherein the second frame rate is less than the first frame rate; and
an image acquisition and processing module, which is configured to process the buffered first captured image and the second captured image at the second frame rate.

7. The apparatus of claim 6, wherein the image acquisition and processing module is configured to:
acquire, through an image processor and at the second frame rate, the buffered first captured image and the second captured image to obtain an acquired captured image; and
process, through an image processor and at the second frame rate, the acquired captured image.

8. The apparatus of claim 6 or 7, wherein
the image acquisition and buffer module comprises: a snapshot label addition unit which is configured to add a snapshot label to the first captured image and buffer the first captured image with the snapshot label added; and
the image acquisition and processing module comprises: an image processor unit which is configured to: in response to the acquired captured image comprising the snapshot label, process the acquired captured image in a first manner; and in response to the acquired captured image comprising no snapshot label, process the acquired captured image in a second manner.

9. An electronic photography device, comprising:
at least one processor; and
a storage apparatus configured to store at least one program;
wherein the at least one program is executed by the at least one processor to cause the at least one processor to implement the image capturing method of any one of claims 1 to 5.

10. A computer-readable storage medium, which is configured to store a computer program which, when executed by a processor, implements the image capturing method of any one of claims 1 to 5.
